(19) **Europäisches Patentamt** / **European Patent Office** / **Office européen des brevets**

(11) **EP 4 749 875 A1**

(12) **EUROPEAN PATENT APPLICATION**

(43) Date of publication:
27.05.2026 Bulletin 2026/22

(51) International Patent Classification (IPC):
$H02J\ 3/46^{(2026.01)}$     $H02J\ 3/38^{(2026.01)}$

(21) Application number: 24214879.9

(52) Cooperative Patent Classification (CPC):
H02J 3/46; H02J 3/381; H02J 2101/28

(22) Date of filing: 22.11.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ABB Schweiz AG
5400 Baden (CH)

(72) Inventors:
• KARACA, Orcun
  8008 Zürich (CH)
• SCHWEIZER, Mario
  5406 Rütihof (CH)
• TSOUMAS, Ioannis
  8032 Zürich (CH)
• STANOJEV, Ognjen
  8050 Zürich (CH)

(74) Representative: Sykora & König Patentanwälte
PartG mbB
Maximilianstraße 2
80539 München (DE)

(54) **METHOD FOR OPERATING AN ELECTRICAL CONVERTER, CONTROL UNIT, AND CONVERTER ARRANGEMENT**

(57)     A method for operating an electrical converter (22) is provided. The electrical converter (22) electrically couples a generator to a grid (28). The method comprises: receiving an input vector ($v$, $i$) being representative of a power parameter of the electrical converter (22); determining an internal voltage reference value ($V^{ref}$) and an angle ($\phi$) referring to a frame angle of the electrical converter (22) depending on an original current reference vector ($i_{dq}^{ref,orig}$) and on the received input vector ($v$, $i$); and determining a control signal (CS) for the electrical converter (22) depending on the internal voltage reference value ($V^{ref}$), the angle ($\phi$), and the original current reference vector ($i_{dq}^{ref,orig}$).

FIG. 1

EP 4 749 875 A1

**Description**

FIELD OF THE INVENTION

The invention relates to the field of electrical converter control. In particular, the invention relates to a method and a control unit for operating an electrical converter, and to a converter arrangement comprising the electrical converter and the control unit.

BACKGROUND OF THE INVENTION

Studies have shown that there is a risk of grid instability if the grid is equipped with a high percentage of converter-interfaced energy resources, such as wind turbines, that do not employ any grid-forming control loops. To this end, recent grid codes for grid-connected electrical converters require having loops that regulate both the voltage and the frequency of these electrical converters. Unlike in standard grid-following electrical converters which have a PLL to synchronize with the grid, the mentioned grid forming electrical converters can achieve synchronization with the grid and between each other by accurately impressing active and reactive power responses according to their internal generator characteristics.

Some grid-forming controllers utilize the measured active and/or reactive power within at least some of their feedback loops, for example droop-controlled electrical converters. However, this is also the case for several more complicated schemes, e.g., the synchronous generator emulation strategies and the power synchronization control variants. By incorporating the power measurement feedback, these grid-forming controllers can then create current references for an inner current controller.

However, electrical converters come with strict limits that may not allow them to realize the original current references suggested by these grid-forming control loops. Not realizing the original current references could be due to many reasons. For example, some electrical converters have a limited over-current capability, especially, when compared to synchronous generators; some converter-interfaced renewables may have limitations on a reverse power capability of the energy source itself and a corresponding voltage limiting unit, or also a limitation on a power ramp capability; another limitation may originate from a modulation index and the voltage capabilities of the electrical converters; depending on the grid impedance, certain original current references may yield a loss of synchronism, thus, they would need to be modified before feeding them into the inner current controller. If any of these limitations and modifications are not accounted for, the electrical converter may lose synchronism resulting in instability. Moreover, synchronous voltage magnitude changes may not be achieved resulting in a reactive power imbalance or even in a limit cycle behaviour.

For the case of an active power controller, or an active power synchronization loop, the prior art suggests switching to a grid-following controller operated with a phase-locked-loop (PLL) whenever the current limits are active. However, in this case, the power system stability aspect is not well-understood or guaranteed, since the grid-forming loops of this electrical converter are deactivated.

As an alternative, a virtual active power concept has been proposed, i.e., the active power computed using the original, unsaturated and unmodified, current references instead of current measurements. However, during fault clearances and phase jumps, the current magnitude limits may be compromised. For these particular cases of current limitation, only the virtual active power was used for the corresponding active power controller, avoiding the loss of synchronism phenomenon and improving the large disturbance stability. However, for some high-end applications this modification alone may be not enough, and there may be a need to extend the virtual power control concepts.

Whenever the original current references cannot be realized by an inner current controller, the information needed to achieve converter synchronization cannot be captured by measuring the actual active and reactive powers. For example, a power synchronization control would correct the angle between the d-axis and the $\alpha$-axis when transferring the voltage vector from the $\alpha\beta$ frame to the dq frame in a wrong manner to enforce its current reference or the droop behavior unaware of the active limits. A similar phenomenon may also occur when using reactive power synchronization and/or PV control and/or QV control. In this case, a reactive power synchronization controller may lose synchronism with the rest of the grid. In contrast, a QV controller may further change a voltage reference what may result in an instability due to a large reactive power transient and/or a wind-up effect. Similarly, a PV controller may face issues in achieving a required synchronous voltage change, which is explained further below to be important for diode-rectifier-based HVDC links.

DESCRIPTION OF THE INVENTION

It is an objective of the present invention to a method and a control unit for operating an electrical converter, which may enable a stable grid interconnection and maintain synchronism and/or a stable operation of the electrical converter with modulation index limits and current limits, which can preserve all the design elements of a standard grid-forming controller, which is simple and may be realized by low engineering efforts for designing the optimal electrical converter for a given application, and/or which may be computationally not expensive and can be computed from already available quantities.

These objectives are achieved by the subject-matter of the independent claims. Further exemplary embodiments are evident from the dependent claims and the following description.

A first aspect relates to a method for operating an electrical converter electrically coupling a generator to a grid, the method comprising: receiving an input vector being representative of a power parameter of the electrical converter; determining an internal voltage reference value and an angle referring to a frame angle of the electrical converter depending on an original current reference vector and on the received input vector; and determining a control signal for the electrical converter depending on the internal voltage reference value, the angle, and the original current reference vector.

A second aspect relates to a control unit for operating the electrical converter which electrically couples the generator to the grid. The control unit comprises: a memory for storing one or more input vectors and power reference values; and a processor communicatively coupled with the memory and being configured to carry out the method in accordance with one of the preceding claims based on the input vectors and power reference values stored in the memory.

A third aspect relates to a converter arrangement. The converter arrangement comprises: at least one electrical converter configured for electrically coupling the generator to the grid; and the control unit being communicatively coupled to the electrical converter for driving the electrical converter. Optionally, the converter arrangement comprises two or more electrical converters which are electrically arranged in parallel or in series with respect to each other.

It has to be understood that some features of the present invention are described with respect to one of the aspects only for conciseness reasons and to avoid unnecessary repetitions, but that these features may be easily transferred to one or more of the other aspects by the person skilled in the art.

According to the present description, the virtual active power can be used for a PV droop/control, and alternatively or additionally, the virtual reactive power can be used within the control loops of the control unit. Nonetheless, the necessary information is always available via both the virtual active power and the virtual reactive power concepts, and the embodiments presented herein make use of that fact.

The method and control unit proposed above and in the following may enable a stable grid interconnection and maintain synchronism even when the current references are modified or limited or not realized. This may especially be advantageous during faults and during large transients, such as unintended tripping of parallel strings or a corresponding High Voltage Direct Current (HVDC) terminal. The method and control unit also enable a stable operation of the electrical converter with tight modulation index limits. The proposed method is simple, and can preserve all the design elements of a standard grid-forming controller. This may contribute to reducing the engineering effort for designing the optimal electrical converter for a given application. In particular, virtual active and reactive power concepts can be implemented such that they are computationally not expensive and can be computed from already available quantities. Further, the proposed method and control unit enable features for black-starting an offshore grid with limited number of wind converters as they ensure synchronism and balanced reactive power. Compared to the past studies, the proposed method and control unit allow avoiding a switch-over logic needed to enable a conventional state of the art controller, which may jeopardize the stability of the whole power system. This again can contribute to reducing the engineering effort to maintain these additional event-triggered control loops.

The method may be carried out by the control unit. The control unit may be configured for operating the electrical converter. The power reference values may be one or more out of a group of power reference values, the group comprising voltage references or current references, e.g., voltage reference values, voltage reference vectors, current reference values, and/or current reference values.

The original current reference vector may be determined by an Alternating Voltage Controller (AVC) of the control unit. The AVC may determine the original current reference vector from a voltage vector in the synchronous reference frame (dq-frame) or in any other arbitrary reference frame, e.g., the $\alpha\beta$ frame. The voltage vector may be determined from the input vector, the internal voltage reference value and the angle, wherein a control loop is realized by this control structure. Alternatively, the original current reference vector may be determined by a low pass filter filtering a current vector measured at the electrical converter.

The method may be embodied as a computer program. The computer program may comprise computer-readable instructions which, when being carried out by the processor of the control unit, force the control unit to carry out the method at the electrical converter. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer readable medium may also be a data communication network, e.g. the Internet, which allows downloading a program code. In general, the computer-readable medium may be a non-transitory or transitory medium.

According to an embodiment, the received input vector is a voltage vector being representative of a voltage of the electrical converter, or the current vector being representative of a current through the electrical converter. The voltage of the electrical converter may be a voltage to provided by the electrical converter, in other words a reference voltage for the electrical converter, or a voltage measured at the electrical converter, e.g., a PCC voltage measured between a Point of Common Coupling (PCC) and a ground potential. The reference voltage may be determined by a current controller of the control unit. The measured voltage may be a voltage vector and/or may be measured by a voltmeter (not shown). The voltmeter may be a component of the electrical converter or of the controller unit carrying out the method. The voltmeter may generate a signal in which the voltage vector is encoded. The signal may be transferred from the voltmeter to the control unit such that the control unit receives the signal and thereby the voltage vector encoded in the signal. The voltage vector may be given in the $\alpha\beta$-frame. The current vector may be measured by an amperemeter. The amperemeter may be a component of the electrical converter or of the controller unit carrying out the method. The amperemeter may generate a signal in which the current vector is encoded. The signal may be transferred from the amperemeter to the control unit such that the control unit receives the signal and thereby the current vector encoded in the signal. The current vector may be given in the $\alpha\beta$-frame. The angle referring to the frame angle of the electrical converter may be the angle the d-axis makes with the $\alpha$-axis when transferring the current vector from the $\alpha\beta$ frame to the dq frame or the angle of the actual converter voltage.

In case of the input vector being the voltage vector, the current vector may be received in addition to the voltage vector. In case of the input vector being the current vector, the voltage vector may be received in addition to the current vector. In case of both vector being received, the control signal for the electrical converter may be determined depending on the voltage vector and the current vector. The usage of the voltage vector or the current vector as the input vector may contribute to carrying out the method very precisely.

According to an embodiment, after determining the internal voltage reference value and the angle depending on the original current reference vector and before determining the control signal the original current reference vector is modified to achieve a modified current reference vector when the original current reference vector does not fulfil at least one predetermined requirement, wherein the original current reference vector is modified such that the modified current reference vector fulfils the requirement. This may contribute to keeping the control unit and the electrical converter in operating regions in which they can be operated safely and efficiently. For example, constraints of the converter arrangement may impose that the current reference vector satisfies one or more predetermined requirements. To enforce the current reference vector fulfilling the requirements the control unit may comprise a modification block for implementing a combination of saturation and/or projection to modify the original current reference vector such that the modified current reference vector satisfies the requirements, and/or for adding additional current references for example for dc-link voltage control.

According to an embodiment, the received voltage vector is given in the $\alpha\beta$-frame, the received voltage vector in the $\alpha\beta$-frame is transferred into the dq-frame depending on the angle, and the control signal for the electrical converter is determined depending on the angle and the original current reference vector by adjusting the original current reference vector depending on the voltage vector in the dq-frame and by determining the control signal from the adjusted current reference vector. In case of the received input vector being the current vector, the received current vector may be given in the $\alpha\beta$-frame, the received current vector in the $\alpha\beta$-frame may be transferred into the dq-frame depending on the angle.

According to an embodiment, the internal voltage reference value and the angle are determined depending on the original current reference vector and on the received input vector by determining a virtual reactive power value depending on the original current reference vector and on the received input vector and by determining the internal voltage reference value and the angle depending on the virtual reactive power value. For example, the virtual reactive power value may be determined depending on the original current reference vector and on the received input vector by

$$Q^{virt} = v^T J \, i^{ref.orig} = v_{dq}^T J \, i_{dq}^{ref,orig}$$

in case of the received input vector being the voltage vector, with J being

$$J = \begin{bmatrix} 0 & -1 \\ 1 & 0 \end{bmatrix}$$

or by

$$Q^{\mathrm{virt}} = -\frac{1}{\sigma}(P\sin(\phi) - Q\cos(\phi))$$

with a degree $\sigma$ of saturation being

$$\sigma = \frac{\|\boldsymbol{i}\|_2}{\|\boldsymbol{i}^{\mathrm{ref,orig}}\|_2} = \frac{\|\boldsymbol{i}_{\mathrm{dq}}\|_2}{\|\boldsymbol{i}_{\mathrm{dq}}^{\mathrm{ref,orig}}\|_2}$$

and with $\phi$ being

$$\phi = \arccos\left(\frac{\boldsymbol{i}^{\top}\boldsymbol{i}^{\mathrm{ref,orig}}}{\|\boldsymbol{i}\|_2 \|\boldsymbol{i}^{\mathrm{ref,orig}}\|_2}\right) = \arccos\left(\frac{\boldsymbol{i}_{\mathrm{dq}}^{\top}\boldsymbol{i}_{\mathrm{dq}}^{\mathrm{ref,orig}}}{\|\boldsymbol{i}_{\mathrm{dq}}\|_2 \|\boldsymbol{i}_{\mathrm{dq}}^{\mathrm{ref,orig}}\|_2}\right)$$

in case of receiving the voltage vector and the current vector, e.g., simultaneously. So, the virtual reactive power value and/or the virtual active power value may be determined depending on the degree $\sigma$ of saturation, which in turn may be determined from the current vector or the original current reference vector.

According to an embodiment, the internal voltage reference value and the angle are determined depending on the original current reference vector and on the received input vector by determining a virtual active power value depending on the original current reference vector and on the received input vector and by determining the internal voltage reference value and the angle depending on the virtual active power value.

For example, the virtual active power value may be determined depending on the original current reference vector and on the received voltage vector by

$$P^{virt} = v^T\, i^{ref.orig} = v_{dq}^T\, i_{dq}^{ref,orig}$$

or depending on the original current reference vector and on the received current vector by

$$P^{\mathrm{virt}} = \frac{1}{\sigma}\left(P\cos(\phi) + Q\sin(\phi)\right)$$

According to an embodiment, the internal voltage reference value and the angle are determined depending on the original current reference vector and on the received input vector by determining a virtual reactive power value and a virtual active power value depending on the original current reference vector and on the received input vector and by determining the internal voltage reference value and the angle depending on the virtual reactive power value and the virtual active power value.

According to an embodiment, the angle is determined depending on the virtual reactive power value by determining a first difference between the virtual reactive power value and a virtual reactive power reference value and by determining the angle depending on the first difference. For example, the first difference may be processed by a first transfer function $K_Q(s)$ and the angle may be determined depending on the processed first difference. For example, a speed reference value referring to the nominal frequency of the grid may be added to the processed first difference and the angle may be determined therefrom. The first transfer function $K_Q(s)$ may be represented by a first linear controller, by a first lookup-table, or by a first non-linear controller, e.g., such as model predictive control.

According to an embodiment, the internal voltage reference value is determined depending on the virtual reactive power value by determining a first difference between the virtual reactive power value and a virtual reactive power reference value and by determining the internal voltage reference value depending on the second difference. For example, the first difference may be processed by a second transfer function $K_{QV}(s)$ and the internal voltage reference value may be determined depending on the processed first difference. For example, an external voltage reference value may be added to the processed first difference and the internal voltage reference value may be determined therefrom. The second transfer function $K_{QV}(s)$ may be represented by a second linear controller, by a second lookup-table, or by a second non-linear controller, e.g., such as model predictive control. The virtual reactive power reference value may be the same virtual reactive power reference value as it is used for determining the angle.

According to an embodiment, the internal voltage reference value is determined depending on the virtual reactive power value by determining a second difference between a voltage vector magnitude of the received voltage vector and an external voltage reference value and by determining the internal voltage reference value depending on the second difference, and the virtual reactive power value and/or a virtual reactive power reference value. For example, the second difference may be processed by a third transfer function $K_1(s)$ and the internal voltage reference value may be determined depending on the processed second difference, and the virtual reactive power value and/or the virtual reactive power reference value. For example, the virtual reactive power reference value may be added to the processed second difference and/or the virtual reactive power may be subtracted from the virtual reactive power reference value, and the internal voltage reference value may be determined therefrom. Optionally, the result of adding the virtual reactive power reference value to the processed second difference and/or, respectively, the result of subtracting virtual reactive power value from the processed second difference may be further processed by a fourth transfer function $K_2(s)$.

The third transfer function $K_1(s)$ may be represented by a third linear controller, by a third lookup-table, or by a third non-linear controller, e.g., such as model predictive control. The virtual reactive power reference value may be the same virtual reactive power reference value as it is used for determining the angle. The fourth transfer function $K_2(s)$ may be represented by a fourth linear controller, by a fourth lookup-table, or by a fourth non-linear controller, e.g., such as model predictive control.

According to an embodiment, the internal voltage reference value is determined depending on the virtual reactive power value by determining the first difference between the virtual reactive power value and a virtual reactive power reference value and by determining the internal voltage reference value depending on the first difference and depending on an external voltage reference value. For example, the first difference may be processed by a fifth transfer function $K_3(s)$ and the internal voltage reference value may be determined depending on the processed first difference. For example, the external voltage reference value may be added to the processed first difference and the internal voltage reference value may be determined therefrom. For example, the voltage vector magnitude may be subtracted from the processed first difference and the result may be further processed by a sixth transfer function $K_4(s)$. The virtual reactive power reference value may be the same virtual reactive power reference value as it is used for determining the angle.

The fifth transfer function $K_3(s)$ may be represented by a fifth linear controller, by a fifth lookup-table, or by a fifth non-linear controller, e.g., such as model predictive control. The sixth transfer function $K_4(s)$ may be represented by a sixth linear controller, by a sixth lookup-table, or by a sixth non-linear controller, e.g., such as model predictive control.

According to an embodiment, the angle is determined depending on the virtual active power value by determining a third difference between the virtual active power value and a virtual active power reference value and by determining the angle depending on the third difference. For example, the third difference may be processed by a seventh transfer function $K_P(s)$ and the angle may be determined depending on the processed third difference. For example, the speed reference value referring to the nominal frequency of the grid may be added to the processed third difference and the angle may be determined therefrom. The seventh transfer function $K_P(s)$ may be represented by a seventh linear controller, by a seventh lookup-table, or by a seventh non-linear controller, e.g., such as model predictive control.

According to an embodiment, the internal voltage reference value is determined depending on the virtual active power value by determining the third difference between the virtual active power value and a virtual reactive power reference value and by determining the internal voltage reference value depending on the third difference. For example, the third difference may be processed by an eight transfer function $K_{PV}(s)$ and the internal voltage reference value may be determined depending on the processed third difference. For example, the external voltage reference value may be added to the processed third difference and the internal voltage reference value may be determined therefrom. The eight transfer function $K_{PV}(s)$ may be represented by an eight linear controller, by an eight lookup-table, or by an eight non-linear controller, e.g., such as model predictive control. The virtual active power reference value may be the same virtual active power reference value as it is used for determining the angle.

According to an embodiment, the internal voltage reference value is determined depending on the virtual active power value by determining the second difference between the voltage vector magnitude of the received voltage vector and an external voltage reference value and by determining the internal voltage reference value depending on the second difference, and the virtual active power value and/or a virtual active power reference value. For example, the second difference may be processed by a ninth transfer function $K_5(s)$ and the internal voltage reference value may be determined depending on the processed second difference, and the virtual active power value and/or the virtual active power reference value. For example, the virtual active power reference value may be added to the processed second difference and/or the virtual active power value may be subtracted from the virtual reactive power reference value, and the internal voltage reference value may be determined therefrom. Optionally, the result of adding the virtual active power reference value to the processed second difference and/or, respectively, the result of subtracting the virtual active power value from the processed second difference may be further processed by a tenth transfer function $K_6(s)$.

The ninth transfer function $K_5(s)$ may be represented by a tenth linear controller, by a tenth lookup-table, or by a tenth non-linear controller, e.g., such as model predictive control. The virtual active power reference value may be the same virtual active power reference value as it is used for determining the angle. The tenth transfer function $K_6(s)$ may be represented by a tenth linear controller, by a tenth lookup-table, or by a tenth non-linear controller, e.g., such as model predictive control.

According to an embodiment, the internal voltage reference value is determined depending on the virtual active power value by determining the third difference between the virtual active power value and a virtual active power reference value and by determining the internal voltage reference value depending on the third difference and depending on an external voltage reference value. For example, the third difference may be processed by an eleventh transfer function $K_7(s)$ and the internal voltage reference value may be determined depending on the processed third difference. For example, the external voltage reference value may be added to the processed third difference and the internal voltage reference value may be determined therefrom. For example, the voltage vector magnitude may be subtracted from the processed third difference and the result may be further processed by a twelfth transfer function $K_8(s)$. The virtual active power reference value may be the same virtual reactive power reference value as it is used for determining the angle.

Another aspect relates to a method for operating the converter arrangement electrically coupling the generator to the grid source, wherein the converter arrangement has two or more electrical converters electrically coupled to each other in parallel or in series. In this embodiment, the method comprises: receiving the input vector being representative of a power parameter of at least one of the electrical converters; determining the internal voltage reference value and the angle referring to a frame angle of all of the electrical converters depending on an original sum current reference vector and on the received input vector; and determining control signals for the electrical converters depending on the internal voltage reference value, the angle, and the original sum current reference vector.

The input vector may be measured at the PCC. In this case, the input vector may refer to all of the electrical converters. Alternatively, the input vector may be measured at a single one of the electrical converters. As another alternative, the input vectors of several ones of the electrical converters may be measured, an average of these input vectors may be determined, and the input vector used for the method may be the averaged input vector. The internal voltage reference value and the angle each may be the same for all of the electrical converters. The original sum current reference vector may be determined by summing up all original current reference vectors for each of the electrical converters, or by determining the original sum current reference vector directly, i.e., without by summing up the original current reference vectors, but by a controller implementation that manipulates the sum current reference, e.g., an alternating voltage controller.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an exemplary embodiment of a converter arrangement coupled to a grid;

Fig. 2 shows an exemplary embodiment of another converter arrangement coupled to a grid;

Fig. 3 shows an exemplary embodiment of a first control block of a control unit of the converter arrangement according to figure 1 or 2;

Fig. 4 shows another exemplary embodiment of the first control block of the control unit of the converter arrangement according to figure 1 or 2;

Fig. 5 shows another exemplary embodiment of the first control block of the control unit of the converter arrangement according to figure 1 or 2;

Fig. 6 shows an exemplary embodiment of a control structure for calculating an angle determined within the first control block;

Fig. 7 shows an exemplary embodiment of a control structure for calculating a voltage reference value determined within the first control block;

Fig. 8 shows another exemplary embodiment of a control structure for calculating the voltage reference value determined within the first control block;

Fig. 9 shows another exemplary embodiment of a control structure for calculating the voltage reference value determined within the first control block;

Fig. 10 shows another exemplary embodiment of a control structure for calculating the angle determined within the first control block;

Fig. 11 shows another exemplary embodiment of a control structure for calculating the voltage reference value determined within the first control block;

Fig. 12 shows another exemplary embodiment of a control structure for calculating the voltage reference value determined within the first control block;

Fig. 13 shows another exemplary embodiment of a control structure for calculating the voltage reference value determined within the first control block;

Fig. 14 shows another exemplary embodiment of a control structure for calculating the angle determined within the first control block;

Fig. 15 shows another exemplary embodiment of a control structure for calculating the voltage reference value determined within the first control block.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

**[Special embodiments of the invention]**

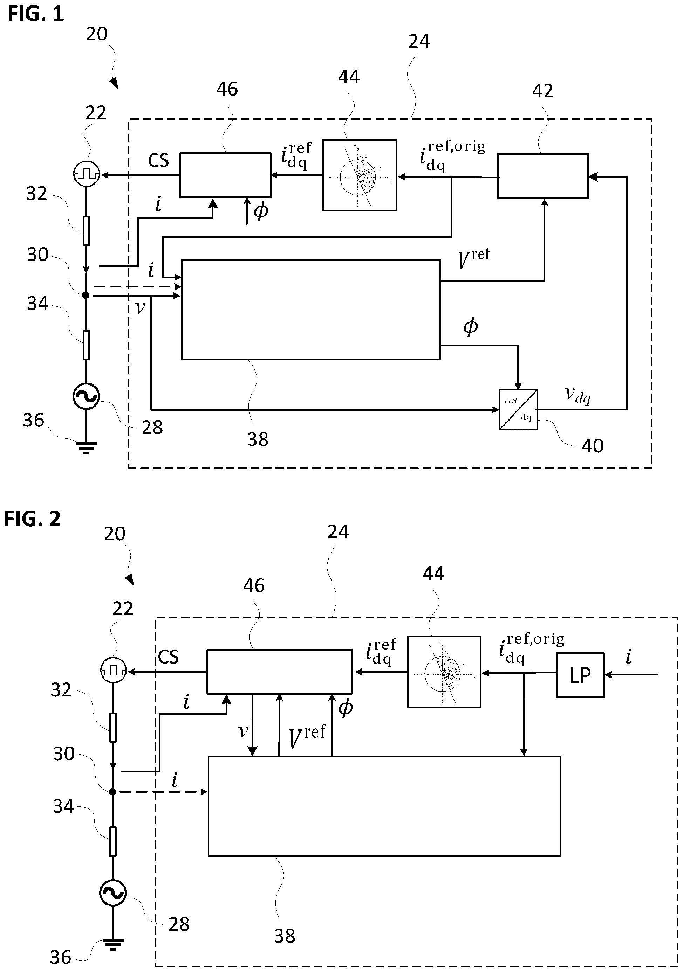

Fig. 1 shows an exemplary embodiment of a converter arrangement 20 coupled to a grid source 28, wherein the converter arrangement 20 has at least one electrical converter 22 and a control unit 24 for operating the electrical converter 22. The electrical converter 22 may electrically couple a generator (not shown) to the grid source 28. The generator may be a component of a wind turbine (not shown) for generating electricity. The control unit 24 is communicatively coupled to the electrical converter 22 for driving the electrical converter 22. In case of the converter arrangement 20 having two or more electrical converters 22, the electrical converters 22 may be electrically arranged in parallel or in series.

In particular, figure 1 shows a block diagram of the converter arrangement 20 including flows of signals communicating measured, calculated and predetermined parameters values and vectors between the different components of the converter arrangement 20, in particular of the control unit 24. Thus, figure 1 is also representative of a method for operating the electrical converter 11, in particular by the control unit 22.

The electrical converter 22 may be coupled to the grid source 28 by a first impedance 32, which may be a first resistor, and/or by a second impedance 34, which may be the grid impedance. The grid source 28 is coupled to a ground potential 36. The ground potential 36 may be an absolute ground potential, such as the earth potential, or another reference potential of the control unit 24. There may be a Point of Common Coupling (PCC) 30 between the first and second impedances 32, 34. In case of the converter arrangement 20 having two or more electrical converters 22, all of the electrical converters 22 may be electrically coupled to the PCC 30.

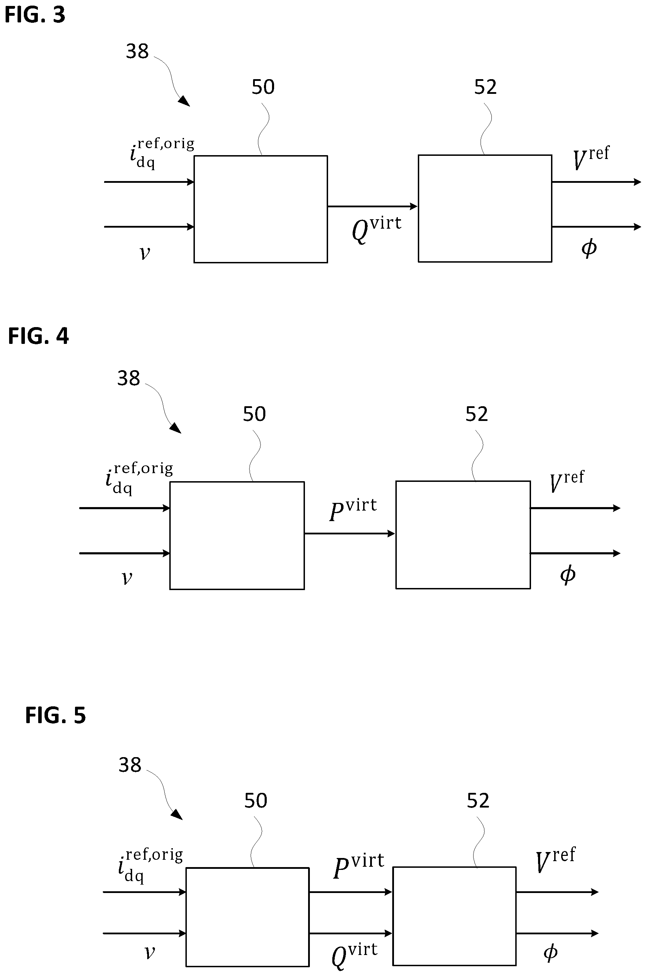

The control unit 24 has a first control block 38 explained in more detail with respect to figures 3, 4, and 5 further below. Further, the control unit 24 has a transformation block 40, an Alternating Voltage Controller (AVC) 42, a modification block 44, and a current controller 46. The first control block 38 may communicate with the transformation block 40, the AVC 42, and the current controller 46. The AVC 42 may communicate with the modification block 44 and the modification block 44 may communicate with the current controller 46. In addition, the control unit 24 has a memory (not shown) for storing one or more input vectors and corresponding reference values and a processor (not shown) communicatively coupled with the memory. The reference values may be one or more out of a group of reference values, the group comprising voltage references or current references, e.g., voltage reference values, voltage reference vectors, current reference values, and/or current reference values. The processor is configured to carry out the method based on the input vectors and power reference values stored in the memory.

An input vector being representative of a power between the PCC 30 of the electrical converter 22 and the grid source 28 may be received by the control unit 24, in particular by the first control block 38. In the embodiment shown in figure 1, the input vector may be a voltage vector $v$ being representative of a voltage between the PCC 30 and the ground potential 38. The voltage vector v may be measured by a voltmeter (not shown). The voltmeter may be a component of the electrical converter 22 or of the controller unit 24 carrying out the method. The voltmeter may generate a signal in which the voltage vector v is encoded. The signal may be transferred from the voltmeter to the control unit 24 such that the control unit 24 receives the signal and thereby the voltage vector v encoded in the signal. The voltage vector $v$ may be given in the $\alpha\beta$-frame.

The first control block 38 determines an internal voltage reference value $V^{ref}$ and an angle $\phi$ referring to a frame angle of the electrical converter 22 depending on an original current reference vector $i_{dq}^{ref,orig}$ in the dq frame and on the received input vector, e.g., the received voltage vector $v$. Several different options have been found by the inventors to determine the internal voltage reference value $V^{ref}$ and the angle $\phi$ depending on an original current reference vector

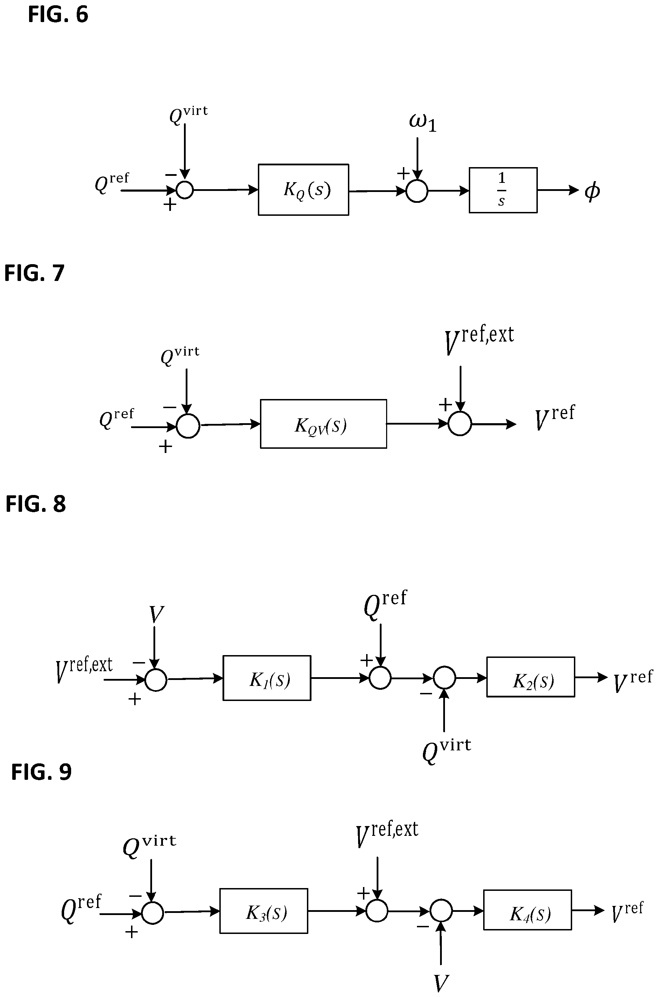

$i_{dq}^{ref,orig}$ and on the received input vector. These different options are described in more detail with respect to figures 3 to 5, and in even more detail with respect to figures 6 to 15.

The angle $\phi$ may be the angle between the d-axis and the $\alpha$-axis when transferring the voltage vector $v$ from the $\alpha\beta$ frame to the dq frame. It has to be mentioned in this context that small reference characters without any indices refer to vectors in the $\alpha\beta$ frame in the present description. In contrast, vectors in the dq frame or abc frame are referred to by small reference characters having the corresponding indices, and capitals refer to scalar values.

The transformation block 40 may receive the voltage vector $v$ and the angle $\phi$ and may determine a corresponding voltage vector $v_{dq}$ in the dq frame therefrom, e.g., by the Park-Transformation.

The AVC 42 may receive the voltage vector $v_{dq}$ in the dq frame and the internal voltage reference value $V^{ref}$ and determines the original current reference vector $i_{dq}^{ref,orig}$ depending on the received voltage vector $v_{dq}$ and the internal voltage reference value $V^{ref}$. So, the original current reference vector $i_{dq}^{ref,orig}$ may be determined by the AVC 42 and may be adjusted by the AVC 42 after a loop such that a control loop is realized by this control structure. The correspondingly adjusted original current reference vector $i_{dq}^{ref,orig}$ may then be forwarded to the modification block 44.

It may happen that the AVC 42 adjusts the original current reference vector $i_{dq}^{ref,orig}$ such that the adjusted original current reference vector $i_{dq}^{ref,orig}$ cannot be implemented by the current controller 46, e.g., because of given constraints of the current controller 46 and/or of the electric converter 22. These constraints may be taken into account and may be seen as one or more predetermined requirements, wherein the original current reference vector $i_{dq}^{ref,orig}$ may be modified such that a correspondingly modified current reference vector $i_{dq}^{ref}$ fulfils the requirement. For example, when considering any reverse power limitations and current magnitude limits, the adjusted current reference vector $i_{dq}^{ref,orig}$ may have to satisfy $i_{dq}^{ref,orig} \in I$ with $I$ being

$$I(v) = \{i \in \mathbb{R}^2 \,|\, v^T i \geq 0, \|i\|_2 \leq I_{lim}\}$$

Therefore, the modification block 44 is provided which enforces $i_{dq}^{ref} \in I$ by implementing a combination of saturation and/or projection of the adjusted original current reference vector $i_{dq}^{ref,orig}$ to modify the adjusted original current reference vector $i_{dq}^{ref,orig}$ and thereby to determine the modified current reference vector $i_{dq}^{ref}$, as it is known in the art. Many variants of such a modification block 44 can be found in the literature and can be used for the converter arrangement 20. Some of these known modification blocks prioritize either one of the dq components, or preserve the angle of the original current reference vector $i_{dq}^{ref,orig}$, wherein some other known approaches modify the original current reference vector $i_{dq}^{ref,orig}$ based on additional feedback loops, for example, for dc-link voltage control from the grid-side converter (not shown). A corresponding output of the modification block 44 may be referred to as modified current reference vector $i_{dq}^{ref}$ and may be passed to the current controller 46.

The current controller 46 may determine a reference voltage vector from the modified current reference vector $i_{dq}^{ref}$. The refence voltage vector may be encoded within a control signal CS for operating the electrical converter 22. So, the refence voltage vector may be applied in form of the control signal CS at the electrical converter 22, wherein the electrical converter 22 is configured for achieving a voltage which corresponds to the refence voltage vector.

In addition to the voltage vector $v$, a current vector $i$ may be received by the control unit 24. The current vector $i$ may be measured by an amperemeter (not shown). The amperemeter may be a component of the electrical converter 22 or of the control unit 24 carrying out the method. The amperemeter may generate a signal in which the current vector $i$ is encoded. The signal may be transferred from the amperemeter to the control unit 24 such that the control unit 24 may receive the signal and thereby the current vector $i$ encoded in the signal. In particular, the current vector $i$ may be received by the current controller 46. The current controller 46 may compare the received current vector $i$ with the modified current reference vector $i_{dq}^{ref}$ and may determined the control signal CS, in particular the voltage reference vector encoded within the control signal, depending on the comparison, e.g., such that the measured current vector $i$ approaches the voltage reference vector. The current vector $i$ may be given in the $\alpha\beta$-frame.

Optionally, the current vector $i$ may be used for determining the internal voltage reference value $V^{ref}$ and the angle $\phi$. In this case, the current vector $i$ may be fed into the first control block 38. This option becomes apparent from the corresponding formulas described below.

Fig. 2 shows an exemplary embodiment of another converter arrangement 20 coupled to the grid 36. The converter arrangement 20 shown in figure 2 may widely correspond to the converter arrangement 20 described with respect to figure 1. Therefore, only those features of in which the converter arrangement 20 shown in figure 2 differs from the converter arrangement 20 shown in figure 1 are described in the following in order to provide a concise description and to avoid unnecessary repetitions.

The control unit 24 of the converter arrangement 20 shown in figure 2 does not comprise any voltage controller, in particular no AVC 42. Therefore, the transformation block 40 may be omitted. In addition, the voltage vector v does not have to be measured. In contrast, the voltage reference vector described above and being determined by the current controller 46 may be used as the voltage vector $v$ for determining the internal voltage reference value $V^{ref}$ and the angle $\phi$. In this case, it is assumed that the voltage vector $v$ corresponds to the voltage reference vector. This assumption/estimation may be acceptable for several applications of the control unit 24.

Because of the missing voltage controller, the original current reference vector $i_{dq}^{ref,orig}$ may be determined by a low pass filter LP filtering the current vector $i$ measured at the electrical converter 22. The current vector $i$ may be representative of a current flowing from the generator 26 to the grid 36. Alternatively, the dq components of the original current reference vector $i_{dq}^{ref,orig}$ may be determined by $i_d^{ref,orig} = \frac{P_{ref}}{V_{ref}}$ and $i_q^{ref,orig} = \frac{Q_{ref}}{V_{ref}}$ .

The received current vector $i$ may be given in the $\alpha\beta$-frame. The received current vector $i$ in the $\alpha\beta$-frame may be transferred into the dq-frame depending on the angle $\phi$. Then, the original current reference vector $i_{dq}^{ref,orig}$ may be adjusted depending on the angle $\phi$ by adjusting the original current reference vector $i_{dq}^{ref,orig}$ depending on the current vector $i$ in the dq-frame.

Fig. 3 shows an exemplary embodiment of the first control block 38 of the control unit 24 of the converter arrangement 20 according to one of figures 1 or 2. The internal voltage reference value $V^{ref}$ and the angle $\phi$ may be determined depending on the original current reference vector $i_{dq}^{ref,orig}$ and on the received input vector, e.g., the received voltage vector $v$, by determining a virtual reactive power value $Q^{virt}$ depending on the original current reference vector $i_{dq}^{ref,orig}$ and on the received input vector, e.g., by a second control block 50 of the control unit 24, and by determining the internal voltage reference value $V^{ref}$ and the angle $\phi$ depending on the virtual reactive power value $Q^{virt}$, e.g., by a third control block 52 of the control unit 24. For example, the virtual reactive power value $Q^{virt}$ may be determined depending on the original current reference vector $i_{dq}^{ref,orig}$ and on the received input vector, i.e., the voltage vector v, by

$$Q^{virt} = v^T J\, i^{ref.orig} = v_{dq}^T J\, i_{dq}^{ref,orig}$$

or by

$$Q^{\mathrm{virt}} = -\frac{1}{\sigma}\left(P\sin(\phi) - Q\cos(\phi)\right)$$

as already introduced in the general description above, wherein

$$P = v^T i = v_{dq}^T i_{dq}$$

and

$$Q = v^T J i = v_{dq}^T J i_{dq}.$$

Fig. 4 shows another exemplary embodiment of the first control block 38 of the control unit 24 of the converter arrangement 20 according to any one of figures 1 or 2. The internal voltage reference value $V^{ref}$ and the angle $\phi$ may be determined depending on the original current reference vector $i_{dq}^{ref,orig}$ and on the received input vector, e.g., the received voltage vector v, by determining a virtual active power value $P^{virt}$ depending on the original current reference vector $i_{dq}^{ref,orig}$ and on the received input vector, e.g., by the second control block 50, and by determining the internal voltage reference value $V^{ref}$ and the angle $\phi$ depending on the virtual active power value $P^{virt}$, e.g., by the third control block 52. For example, the virtual active power value $P^{virt}$ may be determined depending on the original current reference vector $i_{dq}^{ref,orig}$ and on the received input vector, i.e., the voltage vector v, by

$$P^{virt} = v^T i^{ref.orig} = v_{dq}^T i_{dq}^{ref,orig}$$

or by

$$P^{\mathrm{virt}} = \frac{1}{\sigma}(P\cos(\phi) + Q\sin(\phi))$$

as already introduced in the general description above.

Fig. 5 shows another exemplary embodiment of the first control block 38 of the control unit 24 of the converter arrangement 20 according to any one of figures 1 or 2. This embodiment may represent a combination of the embodiments described with respect to figures 3 and 4. In particular, the internal voltage reference value $V^{ref}$ and the angle $\phi$ may be determined depending on the original current reference vector $i_{dq}^{ref,orig}$ and on the received input vector by determining the virtual reactive power value $Q^{virt}$ and the virtual active power value $P^{virt}$ depending on the original current reference vector $i_{dq}^{ref,orig}$ and on the received input vector, e.g., by the second control block 50, and by determining the internal voltage reference value $V^{ref}$ and the angle $\phi$ depending on the virtual reactive power value $Q^{virt}$ and the virtual active power value $P^{virt}$, e.g., by the third control block 52.

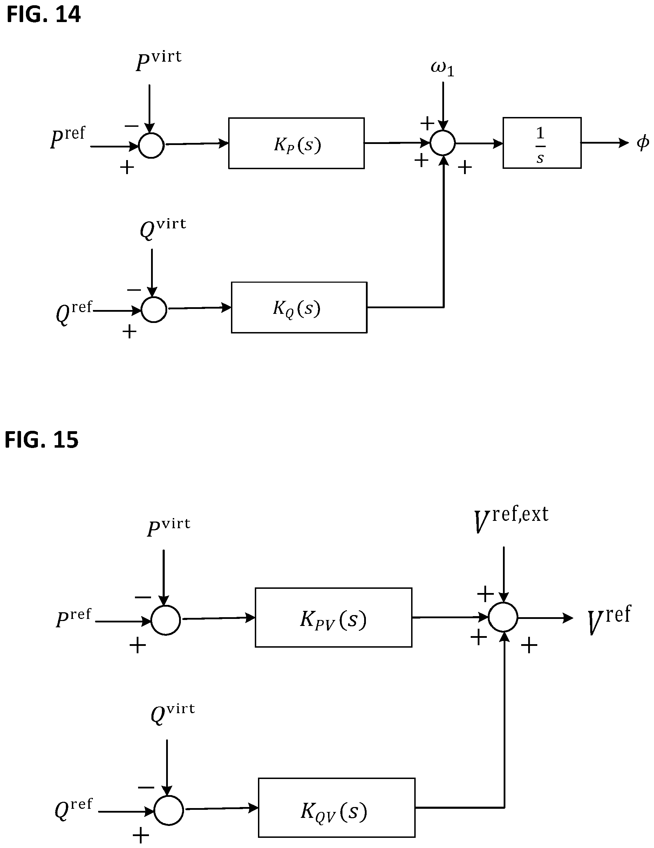

Several possibilities of determining the internal voltage reference value $V^{ref}$ and the angle $\phi$ depending on the virtual reactive power value $Q^{virt}$ and/or the virtual active power value $P^{virt}$ are described in the following with respect to figures 6 to 15, wherein the possibilities described with respect to figures 6 to 13 may be combined with each other to achieve new possibilities as exemplarily explained with respect to figures 14 and 15.

Fig. 6 shows an exemplary embodiment of a control structure for calculating the angle $\phi$ determined within the first control block 38. The control structure may correspond to the third control block 52 or at least forms a component of the third control block 52, in particular that component of the third control block 52 which is configured for determining the angle $\phi$ depending on the virtual reactive power value $Q^{virt}$. The control structure of figure 6 may represent a reactive power synchronization loop with the virtual reactive power value $Q^{virt}$.

Firstly, a first difference between the virtual reactive power value $Q^{virt}$ and a virtual reactive power reference value $Q^{ref}$ may be determined and a first transfer function $K_Q(s)$ may be applied on the first difference. The virtual reactive power reference value $Q^{ref}$ may be provided by a grid operator (not shown) which is externally with respect to the converter arrangement 20. An angular frequency reference value $\omega_1$ referring to the nominal angular frequency of the grid 28 may be added to the output of the first transfer function $K_Q(s)$. The angular frequency reference value $\omega_1$ may correspond to a nominal frequency of the grid 28. The angle $\phi$ may be determined from the corresponding sum, e.g., by integrating the sum. The first transfer function $K_Q(s)$ may be represented by a first linear controller, by a first low-pass filter, by a first gain, by a first lookup-table, or by a first non-linear controller, e.g., such as a first model predictive control. In case of the first amplifier, the corresponding gain may provide the desired droop behaviour. In case of the first low-pass filter, the first low-pass filter may define the bandwidth of the droop action. The first lookup-table may contain a gain scheduling for different operating points, for example. For example, the first transfer function may be given by $K_Q(s) = (K_{gain} \times \omega_c)/(s + \omega_c)$, where $\omega_c$ is the bandwidth of the low-pass filter used for control design and $K_{gain}$ is a proportional gain.

Fig. 7 shows an exemplary embodiment of a control structure for calculating the internal voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual reactive power value $Q^{virt}$. For example, the control structure described with respect to figure 6 and the control structure described with respect to figure 7 may be combined to achieve the complete third control block 52 being configured for determining the voltage reference value $V^{ref}$ and the angle $\phi$. The control structure of figure 7 may represent a reactive power voltage droop or control with the virtual reactive power value $Q^{virt}$.

Firstly, the first difference between the virtual reactive power value $Q^{virt}$ and the virtual reactive power reference value $Q^{ref}$ may be determined. The first difference may be processed by a second transfer function $K_{QV}(s)$. An external voltage reference value $V^{ref,ext}$ may be added to the processed first difference and the result may correspond to the internal voltage reference value $V^{ref}$. The second transfer function $K_{QV}(s)$ may be represented by a second linear controller, by a second lookup-table, or by a second non-linear controller, e.g., such as model predictive control. The virtual reactive power reference value $Q^{ref}$ may be the same virtual reactive power reference value as it is used for determining the angle. The external voltage reference value $V^{ref,ext}$ may be externally communicated, e.g., by a grid operator of the grid, or internally by an internal high-level supervisory controller (not shown). The second transfer function $K_{QV}(s)$ may basically correspond to the first transfer function $K_Q(s)$, wherein another gain value may be used for the second transfer function $K_{QV}(s)$ than for the first transfer function $K_Q(s)$.

Fig. 8 shows another exemplary embodiment of a control structure for calculating the internal voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual reactive power value $Q^{virt}$. For example, the control structure described with respect to figure 6 and the control structure described with respect to figure 8 may be combined to achieve the complete third control block 52 being configured for determining internal the voltage reference value $V^{ref}$ and the angle $\phi$. The control structure of figure 8 may represent a reactive power voltage droop or control with the virtual reactive power value $Q^{virt}$.

Firstly, a second difference between a voltage vector magnitude V of the received voltage vector v and the external voltage reference value $V^{ref,ext}$. The second difference may be processed by a third transfer function $K_1(s)$, the virtual reactive power reference value $Q^{ref}$ may be added to the processed second difference, and the virtual reactive power value $Q^{virt}$ may be subtracted from the resulting sum.

Optionally, the result of adding the virtual reactive power reference value $Q^{ref}$ to the difference between the virtual reactive power value $Q^{virt}$ and the processed second difference may be further processed by a fourth transfer function $K_2(s)$ to achieve the voltage reference value $V^{ref}$. The third transfer function $K_1(s)$ may be represented by a third linear controller, by a third lookup-table, or by a third non-linear controller, e.g., such as model predictive control. The fourth transfer function $K_2(s)$ may be represented by another third linear controller, by another third lookup-table, or by another third non-linear controller, e.g., such as model predictive control. The third transfer function $K_1(s)$ and/or the fourth transfer function $K_2(s)$ may basically correspond to the first or second transfer functions $K_Q(s)$, $K_{QV}(s)$, wherein another gain value may be used for the third or, respectively, fourth transfer function $K_1(s)$, $K_2(s)$ than for the first or, respectively, second transfer function $K_Q(s)$, $K_{QV}(s)$.

Fig. 9 shows another exemplary embodiment of a control structure for calculating the voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual reactive power value $Q^{virt}$. For example, the control structure described with respect to figure 6 and the control structure described with respect to figure 9 may be combined to achieve the complete third control block 52 being configured for determining the internal voltage reference value $V^{ref}$ and the angle $\phi$. The control structure of figure 9 may represent a reactive power voltage droop or control with the virtual reactive power value $Q^{virt}$.

Firstly, the first difference may be determined, as described above. The first difference may be processed by a fifth transfer function $K_3(s)$, the external voltage reference value $V^{ref,ext}$ may be added to the processed first difference, and the internal voltage reference value $V^{ref}$ may be determined therefrom. Then, the voltage vector magnitude $V$ may be subtracted from the processed first difference and the result may be further processed by a sixth transfer function $K_4(s)$. The fifth transfer function $K_3(s)$ and/or the sixth transfer function $K_4(s)$ may basically correspond to the first or second transfer functions $K_Q(s)$, $K_{QV}(s)$, wherein another gain value may be used for the fifth or, respectively, sixth transfer function $K_3(s)$, $K_4(s)$ than for the first or, respectively, second transfer function $K_Q(s)$, $K_{QV}(s)$. The fifth and/or sixth transfer function $K_3(s)$, $K_4(s)$ may be represented by a fifth or, respectively, sixth linear controller, by a fifth or, respectively, sixth lookup-table, or by a fifth or, respectively, sixth non-linear controller, e.g., such as model predictive control.

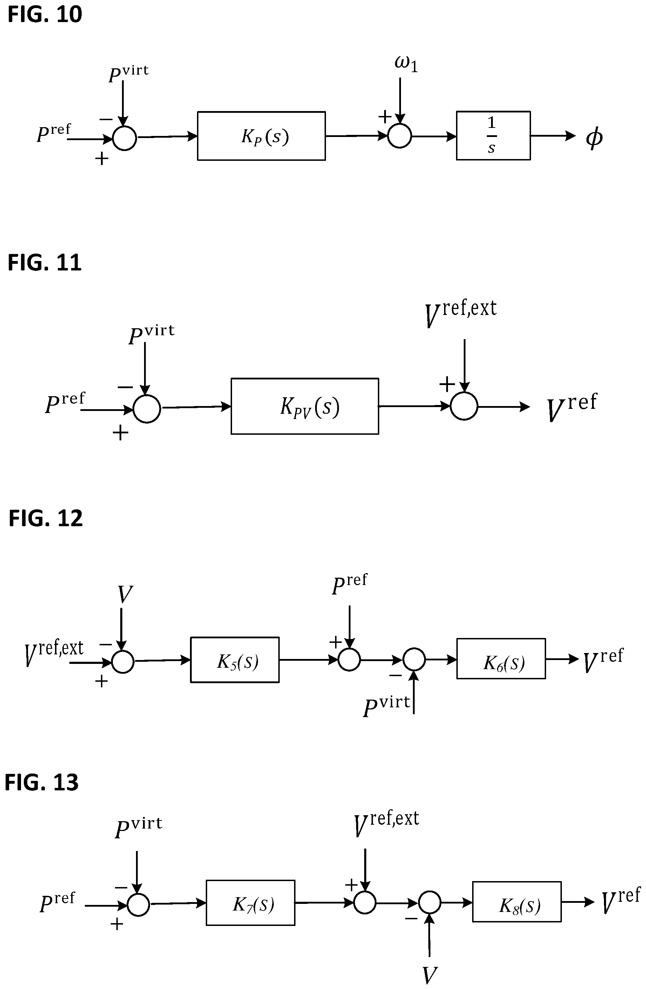

Fig. 10 shows another exemplary embodiment of a control structure for calculating the angle $\phi$ determined within the first control block 38. The control structure may correspond to the third control block 52 or at least forms a component of the third control block 52, in particular that component of the third control block 52 which is configured for determining the angle $\phi$ depending on the virtual active power value $P^{virt}$. The control structure of figure 10 may be used as an alternative to the control structure of figure 6 or may be used in combination with the control structure of figure 6 for determining the angle $\phi$, as described in more detail with respect to figure 14. In any case, the control structure of figure 10 may be used in combination with any one control structure shown in figures 7 to 9 in order to achieve the complete third control block 52. The control structure of figure 10 may represent an active power synchronization loop with the virtual active power value $P^{virt}$.

Firstly, a third difference between the virtual active power value $P^{virt}$ and the virtual active power reference value $P^{ref}$ may be determined, the third difference may be processed by a seventh transfer function $K_P(s)$, and the angle $\phi$ may be determined depending on the processed third difference. For example, the speed reference value $\omega_1$ may be added to the processed third difference and the angle may be determined therefrom. For example, the angle $\phi$ may be determined from the corresponding sum, e.g., by integrating the sum. The seventh transfer function $K_P(s)$ may be represented by a seventh linear controller, by a seventh lookup-table, or by a seventh non-linear controller, e.g., such as model predictive control. The seventh transfer function $K_P(s)$ may be given by $K_P(s) = K_{gain} (T_1 \times s + 1) / (T_2 \times s + 1)$, with $T_1$ and $T_2$ being predetermined time constants.Fig. 11 shows another exemplary embodiment of a control structure for calculating the internal voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual active power value $P^{virt}$. For example, the control structure described with respect to figures 6 and/or 10 and the control structure described with respect to figure 11 may be combined to achieve the complete third control block 52 being configured for determining the voltage reference value $V^{ref}$ and the angle $\phi$. Further, the control structure of figure 11 may be combined with any one of the control structures of figures 7 to 9 to determine the internal voltage reference value $V^{ref}$, as described in more detail with respect to figure 15. The control structure of figure 11 may correspond to an active power voltage droop or control with the virtual active power value $P^{virt}$.

Firstly, the third difference may be determined, the third difference may be processed by an eighth transfer function $K_{PV}(s)$ and the internal voltage reference value $V^{ref}$ may be determined depending on the processed third difference. For example, the external voltage reference value $V^{ref,ext}$ may be added to the processed third difference and the internal voltage reference value may correspond to the resulting sum. The eighth transfer function $K_{PT}(s)$ may be represented by an eighth linear controller, e.g, a PI controller, by an eighth lookup-table, or by an eighth non-linear controller, e.g., such as model predictive control. The eighth transfer function $K_{PV}(s)$ may be given by $K_{PV}(s) = K_{prop} + K_{int}/s$, with $K_{prop}$ being the proportional control gain, and with $K_{int}$ being the integral control gain.

Fig. 12 shows another exemplary embodiment of a control structure for calculating the internal voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual active power value $P^{virt}$. For example, the control structure described with respect to figures 6 and/or 10 and the control structure described with respect to figure 12 may be combined to achieve the complete third control block 52 being configured for determining internal the voltage reference value $V^{ref}$ and the angle $\phi$. Further, the control structure of figure 12 may be combined with any one of the control structures of figures 7 to 9 and 11 to determine the internal voltage reference value $V^{ref}$ as described in more detail with respect to figure 15. The control structure of figure 12 may correspond to an active power voltage droop or control with the virtual active power value $P^{virt}$.

Firstly, the second difference may be determined, the second difference may be processed by a ninth transfer function $K_5(s)$ and the internal voltage reference value $V^{ref}$ may be determined depending on the processed second difference. Then, the virtual active power reference value $P^{ref}$ may be added to the processed second difference and the virtual active power value $P^{virt}$ may be subtracted therefrom. The corresponding result may be further processed by a tenth transfer function $K_6(s)$ to achieve the internal voltage reference value $V^{ref}$. The ninth transfer function $K_5(s)$ may be represented by a ninth linear controller, by a ninth lookup-table, or by a ninth non-linear controller, e.g., such as model predictive control. The ninth transfer function $K_5(s)$ may basically correspond to the first transfer function $K_Q(s)$, wherein another gain value may be used for the ninth transfer function $K_5(s)$ than for the first transfer function $K_Q(s)$. The tenth transfer function $K_6(s)$ may be represented by a tenth linear controller, by a tenth lookup-table, or by a tenth non-linear controller, e.g., such as model predictive control. The tenth transfer function $K_6(s)$ may basically correspond to the first transfer function $K_Q(s)$, wherein another gain value may be used for the tenth transfer function $K_6(s)$ than for the first transfer function $K_Q(s)$.

Fig. 13 shows another exemplary embodiment of a control structure for calculating the internal voltage reference value $V^{ref}$ determined within the first control block 38. The control structure may correspond to the third control block 52 or at least forms a component of the third control block 52, in particular that component of the third control block 52 which is configured for determining the internal voltage reference value $V^{ref}$ depending on the virtual active power value $P^{virt}$. For example, the control structure described with respect to figures 6 and/or 10 and the control structure described with respect to figure 13 may be combined to achieve the complete third control block 52 being configured for determining the internal voltage reference value $V^{ref}$ and the angle $\phi$. Further, the control structure of figure 13 may be combined with any one of the control structures of figures 7 to 9 and 11 or 12 to determine the internal voltage reference value $V^{ref}$ as described in more detail with respect to figure 15. The control structure of figure 13 may correspond to an active power voltage droop or control with the virtual active power value $P^{virt}$.

Firstly, the third difference may be determined, the third difference may be processed by an eleventh transfer function $K_7(s)$, and the external voltage reference value $V^{ref,ext}$ may be added to the processed third difference. Then, the voltage vector magnitude $V$ may be subtracted from the processed third difference and the result may be further processed by a twelfth transfer function $K_8(s)$. The eleventh transfer function $K_7(s)$ may be represented by a eleventh linear controller, by a eleventh lookup-table, or by a eleventh non-linear controller, e.g., such as model predictive control. The eleventh transfer function $K_7(s)$ may basically correspond to the first transfer function $K_Q(s)$, wherein another gain value may be used for the eleventh transfer function $K_7(s)$ than for the first transfer function $K_Q(s)$. The twelfth transfer function $K_8(s)$ may be represented by a twelfth linear controller, by a twelfth lookup-table, or by a twelfth non-linear controller, e.g., such as model predictive control. The twelfth transfer function $K_8(s)$ may basically correspond to the first transfer function $K_Q(s)$, wherein another gain value may be used for the twelfth transfer function $K_8(s)$ than for the first transfer function $K_Q(s)$.

Fig. 14 shows another exemplary embodiment of a control structure for calculating the angle $\phi$ determined within the first control block 38. The control structure of figure 14 represents a combination of the control structures of figures 6 and 10. In particular, the outputs of the transfer functions may be simply summed up, in particular before integrating the corresponding sum. Therefore, in order to provide a concise description and to avoid any unnecessary repetitions, it is referred to figures 6 and 10 above for more details. The control structure of figure 14 may be combined with any one of the control structures of figures 7 to 9 or 11 to 13 to achieve the complete third control block 52.

Fig. 15 shows another exemplary embodiment of a control structure for calculating the internal voltage reference value $V^{ref}$ determined within the first control block. The control structure of figure 15 represents a combination of the control structures of figures 7 and 11. In particular, the outputs of the transfer functions may be simply summed up, wherein the external voltage reference value $V^{ref,ext}$ may also be added to the corresponding sum to determine the internal voltage reference value $V^{ref}$. Therefore, in order to provide a concise description and to avoid any unnecessary repetitions, it is referred to figures 7 and 11 above for more details. The control structure of figure 15 may be combined with any one of the control structures of figures 6, 10, and/or 14 to achieve the complete third control block 52. Further, instead of combining the control structures of figures 7 and 11 to achieve the control structure of 15, the control structures of figures 8, 9, 12, and/or 13 may be combined to achieve the control structure of figure 15. So, the control structure of figure 15 may have three or more of the control structures for determining the internal voltage reference value $V^{ref}$, wherein in case of more than two of the control structures being combined, they may be combined similarly as when combining two of the control structures, i.e., by just summing up their outputs.

Further, the converter arrangement 20 may comprise two or more, e.g., N electrical converters 22, with N being a natural number larger than 1. These electrical converters 22 may be arranged electrically in parallel or in series with respect to each other. Then, a sum and N - 1 difference original current reference vectors may be defined for these converters, e.g., by

$$\underline{i}_{\text{sum}}^{\text{ref,orig}} = \underline{i}_1^{\text{ref,orig}} + \underline{i}_2^{\text{ref,orig}} + \cdots + \underline{i}_N^{\text{ref,orig}}$$

and

$$\underline{i}_{\text{diff},1}^{\text{ref,orig}} = \underline{i}_1^{\text{ref,orig}} - \underline{i}_2^{\text{ref,orig}}, \underline{i}_{\text{diff},2}^{\text{ref,orig}} = \underline{i}_2^{\text{ref,orig}} - \underline{i}_3^{\text{ref,orig}}, \ldots, \underline{i}_{\text{diff},N-1}^{\text{ref,orig}} = \underline{i}_{N-1}^{\text{ref,orig}} - \underline{i}_N^{\text{ref,orig}}$$

respectively. In this case, the grid-injected current would be given by the sum current

$$\sum_{l=1}^{N} i_l^{ref,orig}$$

with l being a natural number. Then, the virtual active power value $P^{virt}$ may be defined as

$$P^{virt} = v^T \, i^{ref,orig}_{sum} = v^T_{dq} \, i^{ref,orig}_{sum}$$

and the virtual reactive power value $Q^{virt}$ may be defined as

$$Q^{virt} = v^T J \, i^{ref,orig}_{sum} = v^T_{dq} J \, i^{ref,orig}_{sum}$$

Further, the alternative calculation method provided above may similarly be extended, e.g, as

$$P^{\text{virt}} = \frac{1}{\sigma_{\text{sum}}} (P \cos(\phi_{\text{sum}}) + Q \sin(\phi_{\text{sum}})),$$

$$Q^{\text{virt}} = -\frac{1}{\sigma_{\text{sum}}} (P \sin(\phi_{\text{sum}}) - Q \cos(\phi_{\text{sum}})),$$

where the degree $\sigma$ of saturation and the angle $\phi$ of rotation are defined by the corresponding sum currents

$$\sigma_{\text{sum}} = \frac{||\boldsymbol{i}_{\text{sum}}||_2}{||\boldsymbol{i}^{\text{ref,orig}}_{\text{sum}}||_2} = \frac{||\boldsymbol{i}_{\text{sum,dq}}||_2}{||\boldsymbol{i}^{\text{ref,orig}}_{\text{sum,dq}}||_2},$$

$$\phi_{\text{sum}} = \arccos \left( \frac{\boldsymbol{i}^{\top}_{\text{sum}} \boldsymbol{i}^{\text{ref,orig}}_{\text{sum}}}{||\boldsymbol{i}_{\text{sum}}||_2 \, ||\boldsymbol{i}^{\text{ref,orig}}_{\text{sum}}||_2} \right) = \arccos \left( \frac{\boldsymbol{i}^{\top}_{\text{sum,dq}} \boldsymbol{i}^{\text{ref,orig}}_{\text{sum,dq}}}{||\boldsymbol{i}_{\text{sum,dq}}||_2 \, ||\boldsymbol{i}^{\text{ref,orig}}_{\text{sum,dq}}||_2} \right).$$

These new definitions of the virtual active and the virtual reactive power values $P^{virt}$, $Q^{virt}$ may be used in the control unit 24 described in the foregoing.

The method for operating the electrical converter 22 as described in the foregoing may be used with any grid-forming controllers that involve a current reference for an inner current controller. The method may address a converter control system with any inner current controller, including proportional (resonant) controllers, proportional-integral controllers, and/or model predictive controllers. The method may be used with any grid-connected converter including single or N > 1 parallel or series conversion lines using the virtual power definitions described above. The method may be used with any grid-connected converter including two-level, three-level, and general multilevel converters.

The method for operating the electrical converter 22 as described in the foregoing with the help of several block diagrams may be embodied as a computer program. The computer program may comprise computer-readable instructions which, when being carried out by a processor of the control unit 24, force the control unit 24 to carry out the method at the electrical converter 22. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Converter arrangement | 20 |
| Electrical converter | 22 |
| Control unit | 24 |
| Grid source | 28 |
| Point of common coupling | 30 |
| First impedance | 32 |
| Second impedance | 34 |
| Ground potential | 36 |
| First control block | 38 |
| Transformation block | 40 |
| Alternating voltage controller | 42 |
| Modification block | 44 |
| Current controller | 46 |
| Second control block | 50 |
| Third control block | 52 |
| Control signal | CS |
| Voltage vector | v |
| Voltage vector in the dq frame | $v_{,dq}$ |
| Original current reference vector | $i_{dq}^{ref,orig}$ |
| Current reference vector | $i_{dq}^{ref}$ |
| Internal voltage reference value | $V^{ref}$ |
| Angle | $\varphi$ |
| Current vector | $i$ |
| Virtual reactive power value | $Q^{virt}$ |
| Virtual reactive power reference value | $Q^{ref}$ |
| Virtual active power value | $P^{virt}$ |
| Virtual active power reference value | $P^{ref}$ |
| External voltage reference value | $V^{ref,ext}$ |
| Voltage vector magnitude | $V$ |
| Speed reference value | $\omega_1$ |

**Claims**

1. A method for operating an electrical converter (22) electrically coupling a generator (26) to a grid (28), the method comprising:

receiving an input vector (*v*, *i*) being representative of a power parameter of the electrical converter (22);
determining an internal voltage reference value ($V^{ref}$) and an angle ($\phi$) referring to a frame angle of the electrical converter (22) depending on an original current reference vector ( $i_{dq}^{ref,orig}$ ) and on the received input vector (*v*, *i*); and
determining a control signal (CS) for the electrical converter (22) depending on the internal voltage reference value ($V^{ref}$), the angle ($\phi$), and the original current reference vector ( $i_{dq}^{ref,orig}$ ).

2. The method according to claim 1, wherein the received input vector (*v*, *i*) is

a voltage vector (*v*) being representative of a voltage of the electrical converter (22), or
a current vector (*i*) being representative of a current through the electrical converter (22).

3. The method according to one of the preceding claims, after determining the internal voltage reference value ($V^{ref}$) and the angle ($\phi$) depending on the original current reference vector ($i_{dq}^{ref,orig}$) and before determining the control signal (CS) comprising:

modifying the original current reference vector ($i_{dq}^{ref,orig}$) to achieve a modified current reference vector ($i_{dq}^{ref}$) when the original current reference vector ($i_{dq}^{ref,orig}$) does not fulfil at least one predetermined requirement, wherein the original current reference vector ($i_{dq}^{ref,orig}$) is modified such that the modified current reference vector ($i_{dq}^{ref}$) fulfils the requirement.

4. The method according to one of claims 2 or 3, wherein

the received voltage vector ($v$) is given in the $\alpha\beta$-frame,
the received voltage vector ($v$) in the $\alpha\beta$-frame is transferred into the dq-frame depending on the angle ($\phi$), and
the control signal (CS) for the electrical converter (22) is determined depending on the angle ($\phi$) and the original current reference vector ($i_{dq}^{ref,orig}$) by adjusting the original current reference vector ($i_{dq}^{ref,orig}$) depending on the voltage vector ($v$) in the dq-frame and by determining the control signal (CS) from the adjusted original current reference vector ($i_{dq}^{ref,orig}$).

5. The method according to one of the preceding claims, wherein
the internal voltage reference value ($V^{ref}$) and the angle ($\phi$) are determined depending on the original current reference vector ($i_{dq}^{ref,orig}$) and on the received input vector ($v$, $i$) by determining a virtual reactive power value ($Q^{virt}$) depending on the original current reference vector ($i_{dq}^{ref,orig}$) and on the received input vector ($v$, $i$) and by determining the internal voltage reference value ($V^{ref}$) and the angle ($\phi$) depending on the virtual reactive power value ($Q^{virt}$).

6. The method according to one of the preceding claims, wherein
the internal voltage reference value ($V^{ref}$) and the angle ($\phi$) are determined depending on the original current reference vector ($i_{dq}^{ref,orig}$) and on the received input vector ($v$, $i$) by determining a virtual active power value ($P^{virt}$) depending on the original current reference vector ($i_{dq}^{ref,orig}$) and on the received input vector ($v$, $i$) and by determining the internal voltage reference value ($V^{ref}$) and the angle ($\phi$) depending on the virtual active power value ($P^{virt}$).

7. The method according to one of claims 1 to 4, wherein
the internal voltage reference value ($V^{ref}$) and the angle ($\phi$) are determined depending on the original current reference vector ($i_{dq}^{ref,orig}$) and on the received input vector ($v$, $i$) by determining a virtual reactive power value ($Q^{virt}$) and a virtual active power value ($P^{virt}$) depending on the original current reference vector ($i_{dq}^{ref,orig}$) and on the received input vector ($v$, $i$) and by determining the internal voltage reference value ($V^{ref}$) and the angle ($\phi$) depending on the virtual reactive power value ($Q^{virt}$) and the virtual active power value ($P^{virt}$).

8. The method according to one of claims 5 or 7, wherein
the angle ($\phi$) is determined depending on the virtual reactive power value ($Q^{virt}$) by determining a first difference between the virtual reactive power value ($Q^{virt}$) and a virtual reactive power reference value ($Q^{ref}$) and by determining the angle ($\phi$) depending on the first difference.

9. The method according to one of claims 5, 7 or 8, wherein
the internal voltage reference value ($V^{ref}$) is determined depending on the virtual reactive power value ($Q^{virt}$) by determining a first difference between the virtual reactive power value ($Q^{virt}$) and a virtual reactive power reference value ($Q^{ref}$) and by determining the internal voltage reference value ($V^{ref}$) depending on the first difference.

10. The method according to one of claims 5, 7 or 8, wherein
    the internal voltage reference value ($V^{ref}$) is determined depending on the virtual reactive power value ($Q^{virt}$) by determining a second difference between a voltage vector magnitude ($V$) of the received voltage vector ($v$) and an external voltage reference value ($V^{ref,ext}$) and by determining the internal voltage reference value ($V^{ref}$) depending on the second difference, and the virtual reactive power value ($Q^{virt}$) and/or a virtual reactive power reference value ($Q^{ref}$).

11. The method according to one of claims 5, 7 or 8, wherein
    the internal voltage reference value ($V^{ref}$) is determined depending on the virtual reactive power value ($Q^{virt}$) by determining a first difference between the virtual reactive power value ($Q^{virt}$) and a virtual reactive power reference value ($Q^{ref}$) and by determining the internal voltage reference value ($V^{ref}$) depending on the first difference and depending on an external voltage reference value ($V^{ref,ext}$).

12. The method according to one of claims 6 or 7, wherein
    the angle ($\phi$) is determined depending on the virtual active power value ($P^{virt}$) by determining a third difference between the virtual active power value ($P^{virt}$) and a virtual active power reference value ($P^{ref}$) and by determining the angle ($\phi$) depending on the third difference.

13. The method according to one of claims 6, 7 or 12, wherein
    the internal voltage reference value ($V^{ref}$) is determined depending on the virtual active power value ($P^{virt}$) by determining a third difference between the virtual active power value ($P^{virt}$) and a virtual reactive power reference value ($P^{ref}$) and by determining the internal voltage reference value ($V^{ref}$) depending on the third difference.

14. The method according to one of claims 6, 7 or 12, wherein
    the internal voltage reference value ($V^{ref}$) is determined depending on the virtual active power value ($P^{virt}$) by determining a second difference between a voltage vector magnitude ($V$) of the received voltage vector ($v$) and an external voltage reference value ($V^{ref,ext}$) and by determining the internal voltage reference value ($V^{ref}$) depending on the second difference, and the virtual active power value ($P^{virt}$) and/or a virtual active power reference value ($P^{ref}$).

15. The method according to one of claims 6, 7 or 12, wherein
    the internal voltage reference value ($V^{ref}$) is determined depending on the virtual active power value ($P^{virt}$) by determining a third difference between the virtual active power value ($P^{virt}$) and a virtual active power reference value ($P^{ref}$) and by determining the internal voltage reference value ($V^{ref}$) depending on the third difference and depending on an external voltage reference value ($V^{ref,ext}$).

16. A method for operating a converter arrangement (20) electrically coupling a generator (26) to a grid source (28), the converter arrangement (20) comprising two or more electrical converters (22) electrically coupled to each other in parallel or in series, the method comprising:

    receiving an input vector ($v$, $i$) being representative of a power parameter of at least one of the electrical converters (22);
    determining an internal voltage reference value ($V^{ref}$) and an angle ($\phi$) referring to a frame angle of all of the electrical converters (22) depending on an original sum current reference vector ($i_{dq,sum}^{ref,orig}$) and on the received input vector ($v$, $i$); and
    determining control signals (CS) for the electrical converters (22) depending on the internal voltage reference value ($V^{ref}$), the angle ($\phi$), and the original sum current reference vector ($i_{dq,sum}^{ref,orig}$).

17. A control unit (24) for operating an electrical converter (22) electrically coupling a generator (26) to a grid (28), the control unit (24) comprising:

    a memory for storing one or more input vectors and power reference values; and
    a processor communicatively coupled with the memory and being configured to carry out at least one of the methods in accordance with one of the preceding claims based on the input vectors and power reference values stored in the memory.

18. A converter arrangement (20), comprising:

an electrical converter (22) configured for electrically coupling a generator (26) to a grid (28); and
a control unit (24) in accordance with claim 17 and being communicatively coupled to the electrical converter (22)
for driving the electrical converter.

**FIG. 1**

**FIG. 2**

**FIG. 3**

38

50    52

$i_{dq}^{ref,orig}$

$v$

$Q^{virt}$

$V^{ref}$

$\phi$

**FIG. 4**

38

50    52

$i_{dq}^{ref,orig}$

$v$

$P^{virt}$

$V^{ref}$

$\phi$

**FIG. 5**

38

50    52

$i_{dq}^{ref,orig}$

$v$

$P^{virt}$

$Q^{virt}$

$V^{ref}$

$\phi$

EP 4 749 875 A1

FIG. 6

FIG. 7

FIG. 8

FIG. 9

**FIG. 10**

**FIG. 11**

**FIG. 12**

**FIG. 13**

**FIG. 14**

**FIG. 15**

Europäisches
Patentamt
European
Patent Office
Office européen
des brevets

**EUROPEAN SEARCH REPORT**

Application Number

EP 24 21 4879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARNEFORS LENNART ET AL: "A Universal Controller for Grid-Connected Voltage-Source Converters", IEEE JOURNAL OF EMERGING AND SELECTED TOPICS IN POWER ELECTRONICS, IEEE, PISCATAWAY, NJ, USA, vol. 9, no. 5, 19 November 2020 (2020-11-19), pages 5761-5770, XP011880523, ISSN: 2168-6777, DOI: 10.1109/JESTPE.2020.3039407 [retrieved on 2021-09-29] | 1-4, 16-18 | INV. H02J3/46 H02J3/38 |
| A | * abstract * <br> * figures 1(a),1(b),2-4 * <br> * page 5762 - page 5763 * <br> ----- | 5-15 | |
| X | EP 4 372 949 A1 (NR ELECTRIC CO LTD [CN]; NR ENGINEERING CO LTD [CN]) 22 May 2024 (2024-05-22) | 1-4, 16-18 | |
| A | * abstract * <br> * figures 1a,1b,2,3b,4-6 * <br> * paragraphs [0001], [0006], [0052] * <br> ----- | 5-15 | TECHNICAL FIELDS SEARCHED (IPC) <br><br> H02J |

The present search report has been drawn up for all claims

| Place of search | Date of completion of the search | Examiner |
|---|---|---|
| Munich | 26 June 2025 | Zettler, Karl-Rudolf |

EPO FORM 1503 03.82 (P04C01)

## ANNEX TO THE EUROPEAN SEARCH REPORT
## ON EUROPEAN PATENT APPLICATION NO.

EP 24 21 4879

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | | Publication date | Patent family member(s) | | Publication date |
|---|---|---|---|---|---|
| EP 4372949 | A1 | 22-05-2024 | CN | 116365576 A | 30-06-2023 |
| | | | EP | 4372949 A1 | 22-05-2024 |
| | | | WO | 2023125428 A1 | 06-07-2023 |

EPO FORM P0459

For more details about this annex : see Official Journal of the European Patent Office, No. 12/82